# EUROPÄISCHE PATENTSCHRIFT

(11) **EP 0 632 555 B1**
(45) Veröffentlichungstag und Bekanntmachung des Hinweises auf die Patenterteilung: **10.12.1997**
(21) Anmeldenummer: 94108989.8
(22) Anmeldetag: 13.06.1994
(51) Int. Cl.: H02G 3/00

(54) **Elektroinstallationssystem**
Power distribution system
Système d'installation électrique

(30) Priorität: 17.06.1993 DE 4319832
(43) Veröffentlichungstag der Anmeldung: 04.01.1995
(73) Patentinhaber: A. & H. Meyer GmbH Leuchten und Büroelektrik, 32694 Dörentrup (DE)
(72) Erfinder: Meyer, Horst, D-32694 Dörentrup (DE)
(74) Vertreter: Hanewinkel, Lorenz, Dipl.-Phys.

(56) Entgegenhaltungen:
- EP-A- 0 535 527
- DE-U- 8 701 371
- US-A- 5 046 963

## Beschreibung

Die Erfindung bezieht sich auf ein Elektroinstallationssystem für die Haus- und Arbeitsplatzelektrifizierung, gemäß dem Oberbegriff des Anspruchs 1. Ein derartiges Elektroinstallationssystem ist aus DE-U-87 01 371 bekannt.

Bei der Hauselektrifizierung ist es bisher allgemein üblich, die elektrischen Leitungen unter Putz in in den Gebäudewandungen eingelassenen Rohren zu verlegen und dann von vielen Anschlußstellen aus die Verkabelung zu den einzelnen Stromabnehmern durchzuführen. Diese Verkabelung ist arbeitsintensiv und kostspielig. Durch die vorbestimmten Anschlußstellen ist vielfach ein späteres Weiterverkabeln für noch gewünschte Steckdosen, Leuchten- oder Geräteanschlüsse nicht oder nur sehr umständlich möglich.

Weiterhin wird vielfach in neuerer Zeit mit auf oder in den Wand- und/oder Deckenflächen festgelegten Kabelkanälen gearbeitet, in die Stromabnehmer (Steckdosen, Schalter u. dgl.) eingesetzt werden, die über mit Stromschienen in den Kabelkanälen zusammenwirkenden Adaptern die Stromversorgung erhalten. Hierbei sind aber auch noch Verkabelungsarbeiten erforderlich und eine spätere Veränderung der Stromabnehmer oder Verlegung über mehrere Ebenen ist schwierig. Insbesondere tritt dieser Nachteil häufig in Büros, in Kaufhäusern oder Großmärkten auf, in dem dort von Zeit zu Zeit ein Umbau stattfindet und hierbei, trotz der Kabelkanäle eine aufwendige und manuell durchführbare Verlegung und Verkabelung erforderlich wird.

Bei der Arbeitsplatzelektrifizierung bestehen weiterhin die Nachteile der ständig wachsenden Stromabnahme und zu geringer Stromeinspeisung. Insbesondere in Büros, in denen jeder Arbeitsplatz mit mehreren elektrischen Geräten, wie Computer, elektrische Schreibmaschinen, elektrische Rechenmaschinen usw. ausgerüstet ist, kann bei der üblichen 220 V-Einspeisung die stromführende Phase nur bis etwa 3000 Watt belastet werden, so daß die Kapazität für mehrere hintereinander geschaltete Geräte nicht ausreicht.

Hierfür müßte dann eine 380 V-Einspeisung erfolgen; dabei ist jedoch für das Verlegen der elektrischen Leitungen und deren Aufsplittung in die normalen 220 V-Stromkreise ein Fachmann erforderlich, was eine zeit- und kostenaufwendige Montage ergibt. Auch bei einem Arbeitsplatzumbau oder einer späteren Nachrüstung an weiteren Stromverbrauchergeräten wird wiederum ein Fachmann benötigt.

Aufgabe der Erfindung ist es deshalb, ein Installationssystem für die Haus- und Arbeitsplatzelektrifizierung zu schaffen, das in einfacher, kostengünstiger und geringen Arbeitsaufwand erfordernder Weise eine vielseitige, variable und jederzeit veränder- sowie austauschbare Verlegung, Anordnung und Verbindung von Stromabnahmestellen innerhalb einer und mehrere Ebene ohne elektrische Verkabelungsarbeiten ermöglicht und vielseitig einsetzbar sowie auch von Nichtfachleuten montiert und wunschgemäß verändert bzw. um- und nachgerüstet werden kann.

Diese Aufgabe wird erfindungsgemäß durch die kennzeichnenden Merkmale des Patentanspruches 1 gelöst; die sich daran anschließenden Unteransprüche beinhalten vorteilhafte und förderliche Weiterbildungen der Aufgabenlösung.

Das erfindungsgemäße Elektroinstallationssystem arbeitet für eine Vielzahl an Stromverbrauchern mit einer Verteilerbox, in welche eine 380 V-Stromeinspeisung erfolgt, die die stromführenden Phasen in der Verteilerbox zu drei 220 V-Stromkreisen gesplittet und vorverdrahtet werden. Die Stromabnahme von jedem der drei Stromabnehmer erfolgt von der Verteilerbox durch codierte Steckverbindungen und zwar hat jeder 220 V-Stromkreis eine eigene codierte Steckbuchse, in die nur das spezielle Gegenstück in Steckerform der Stromabnahmeleitung paßt, so daß eine Phasenverwechslung ausgeschlossen ist.
Die 380 V-Splittung in drei 220 V-Stromkreise in Verbindung mit der codierten Steckabnahme ergibt ein unverwechselbares Stromverteilersystem, in dem Kurzschlüsse oder fehlende Stromabnahme ausgeschlossen werden. Auch bei Ausfall einer der drei 220 V-Stromkreise führen die beiden anderen Stromkreise weiterhin Strom.

Die 380 V-Einspeisung hat eine Stromabnahme für viele aneinanderhängende Stromverbraucher geschaffen und ist somit optimal für die Haus- und Arbeitsplatzelektrifizierung, da durch die Aufsplittung und Vorverkabelung und codierte Steckverbindung ein Um- und Nachrüsten ohne Hilfe eines Fachmannes in kurzer Zeit durchgeführt werden kann.

Weiterhin lassen sich in die drei 220 V-Stromkreise Schalter einsetzen, die als manuell oder fern- und berührungslos bedienbare Ein- und Ausschalter, als Zeitschalter, als Signalschalter bei Stromkreisausfall und vieles mehr ausgebildet sein können.

Aus der EP 0 140 079 ist weiterhin ein Installationssystem mit Zwischensteckern, Installationsdose, konfektionierten Leitungen mit drei- und fünfphasrigen Steckern sowie flexiblen Anschlußleitungen für eine variable Installationsgestaltung bekannt geworden.

Jedoch arbeitet dieses System nicht mit einer Stromeinspeisesplittung und nicht mit einer codierten Steckverbindung, sondern bei diesem System müssen die elektrischen Leitungen von einem Fachmann durchgemessen und für die jeweils zu benutzende Phase ein passender Stecker vorgesehen und aufgesteckt werden; dieses ist für die einfache und auch von Nichtfachleuten bei der Arbeitsplatzelektrifizierung gewollte Um- und Nachrüstung nicht geeignet und desweiteren können auch bei der Phasenbestimmung Fehler auftreten. Dieses bekannte System ergibt nicht die Effektivität in der Stromverbraucherabnahme wie der Erfindungsgedanke im Kennzeichen des vorliegenden Patentanspruches. Gemäß eine Ausgestaltung des erfindungsgemäßen Elektroinstallationssystems arbeitet dieses weiterhin mit vorverkabelten Steckdosenboxen, vorkonfektionierten elektrischen Verbindungsleitungen und vorkonfektionierten elektrischen Verteilerblöcken und ist an/in einem Schienensystem von in oder auf Gebäudewandungen festlegbaren Montageschienen bzw. Kabelkanälen adaptierbar und hierbei innerhalb einer oder mehrerer Ebenen.

Die ein- oder mehrpoligen, einen oder mehrere Stromkreise beinhaltenden, fertigverkabelten Steckdosenboxen und die vorkonfektionierten Verbindungskabel haben codierte, zusammenwirkende Steckverbinder, die unter Vermeidung einer Phasenvertauschung nur in phasengerechter Weise elektrisch miteinander verbunden werden können, was eine große elektrische Sicherheit gewährleistet.

Die Größe des zu erstellenden Eletrifizierungsnetzes und die Anzahl der eingesetzten Stromabnahmestellen (Steckdosenboxen) ist beliebig und die Kabelverbindung kann fünfpolig oder dreipolig aufgesplittet geführt werden von einer Steckdosenbox zur anderen Steckdosenbox oder von einem Verteilerblock zu mehreren Stromabnehmern (z.B. Computergeräten).

Das gesamte System ist schraubenlos zusammensetzbar, in dem die Steckdosenboxen und Verteilerblöcke in/auf den Kabelkanälen durch Eletrifizierungsnetzes festgelegt werden und die elektrische Verbindung durch die codierte Steckverbindung zwischen Verbindungskabeln und Steckdosenboxen bzw. Verteilerblöcken erfolgt, so daß dieses System von jedem Laien elektrisch sicher erstellt werden kann.

Weiterhin ist durch vorkonfektionierten Bauteile und die handelsüblichen Kabelkanäle bzw. Montageschienen eine große Variation in der Anordnung der Stromabnahmestellen, jederzeit eine beliebige Lageveränderung, Nachrüstung oder Umrüstung in einfacher und schneller Weise möglich.

Die Steckdosenbox wird im Kabelkanal lediglich an die andere gewünschte Stelle gesetzt oder eine oder mehrere zusätzliche Steckdosenboxen werden in den Kabelkanal eingesetzt und dann erfolgt die Steckdosenboxverbindung durch längere oder kürzere, vorkonfektionierte Verbindungskabel in schraubenloser Weise. Jegliche Verkabelungsarbeiten entfallen.

Auch sind Normal-Steckdosenboxen durch die Phasencodierungen kompatibel mit anderen Steckdosenboxen, so daß eine Normalbox gegen eine spezielle Box ausgetauscht werden kann.

Bei diesem System ist auch die Anordnung von Steuerleitungen für Schaltkreise möglich.

Dieses sehr einfache und variable und aufgrund der vorkonfektionierten Bauteile und entfallenden Verkabelungsarbeiten preisgünstiger und in kürzester Zeit erstellbare bzw. um- und nachrüstbare Installationssystem ist mit einer normalen Hauselektrik vergleichbar, jedoch besitzt es einen höheren Gebrauchswert.

Das System kann im normalen Haushalt, in Gebäuden, in Büros, in Werkstätten an/in den vorhandenen Wandungen installiert werden und ist auch für die Möbel- und Trennwandmontage in Wohn- und Arbeitsräumen, Kaufhäusern, in Schulen, Labors, Kliniken, Hospitälern und kommunalen Gebäuden in wirtschaftlicher Weise einsetzbar und rationell erstellbar.

Auf den Zeichnungen ist ein Ausführungsbeispiel der Erfindung in Variation dargestellt, welches nachfolgendes näher erläutert wird. Es zeigt:
- Fig. 1: eine schematische Darstellung einer Arbeitsplatzelektrifizierung mit einer mit einer 380 V-Einspeisung ausgestatteten und drei 220 V-Stromkreise abgebenden Verteilerbox,
- Fig. 2: eine schematische Darstellung der Verteilerbox mit 380 V-Einspeisekabel und drei codierten Steckverbindungen für die Abnahme der drei 220 V-Stromkreise zum Verbraucher,

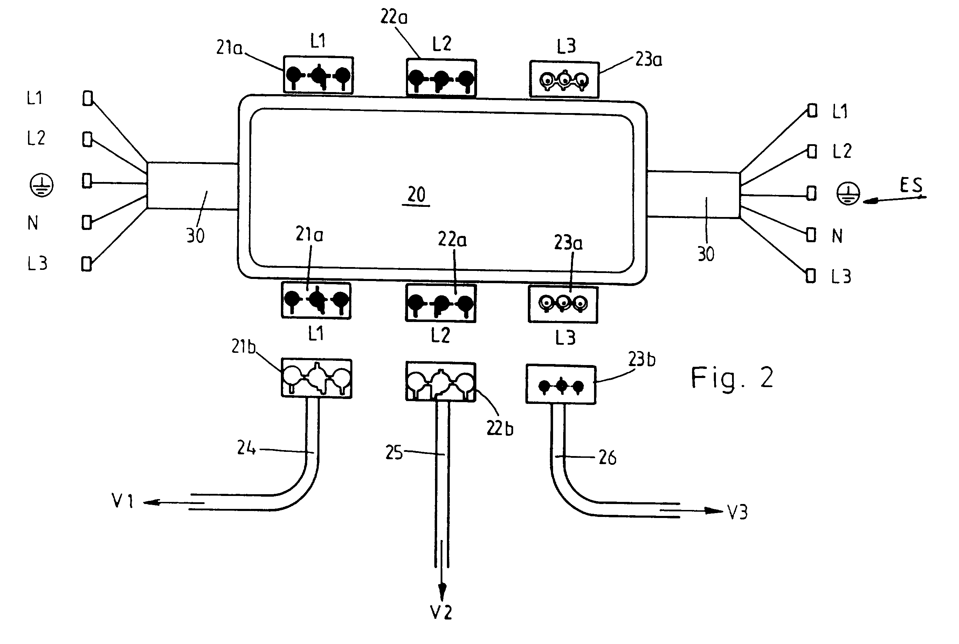

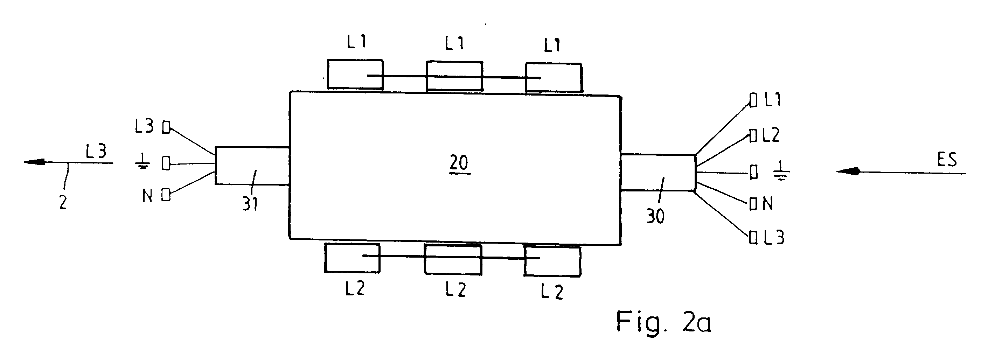

- Fig. 2 a: eine schematische Darstellung der Verteilerbox in Variante der gesplitteten Stromkreis-Abnahme und - Weiterführung,

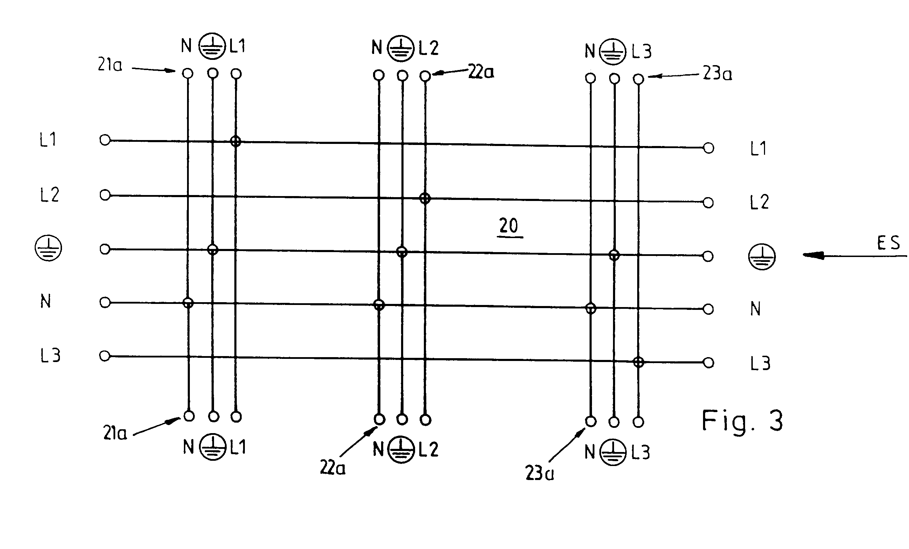

- Fig. 3: ein elektrisches Schaltbild über die Splittung der 380 V-Einspeisung in die drei 220 V-Stromkreise,

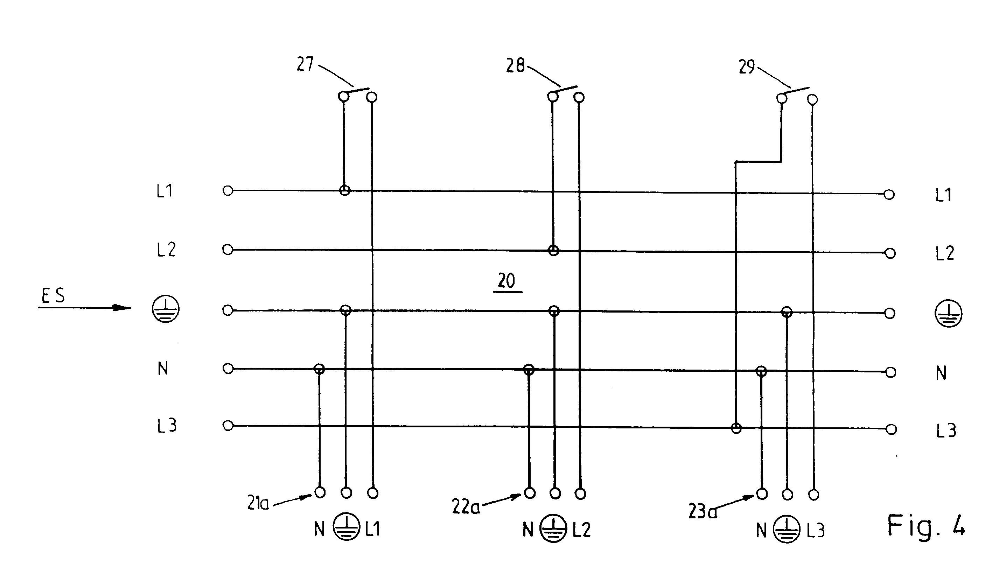

- Fig. 4: das elektrische Schaltbild nach Fig. 3, jedoch mit den drei 220 V-Stromkreisen zugeordneten Ein- und Ausschaltern.

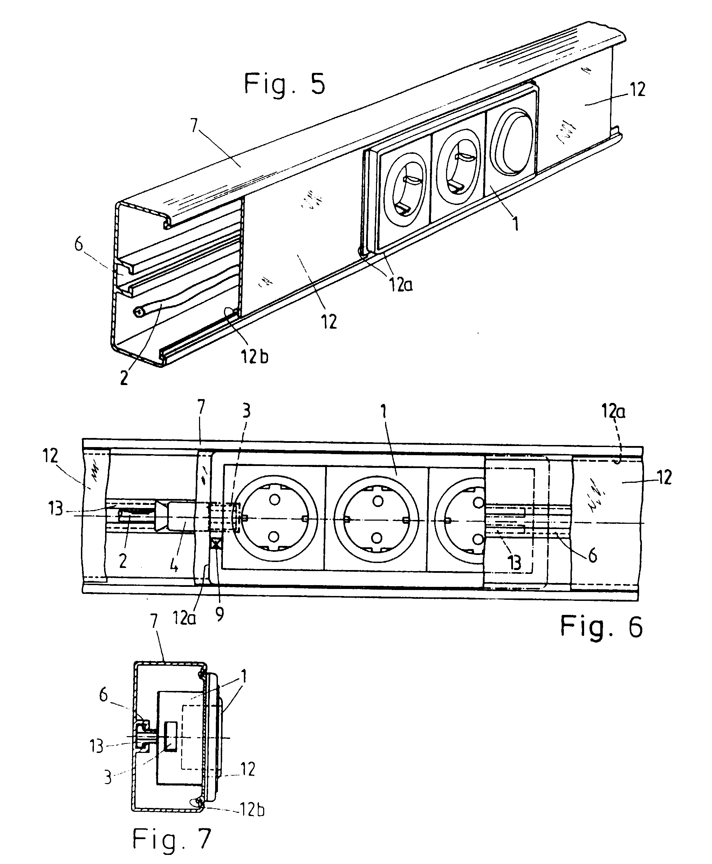

- Fig. 5: eine perspektivische Darstellung eines Kabelkanales mit darin eingesetzter Steckdosenbox und an der Zugangsseite vorgesehener Abdeckung,
- Fig. 6: eine Draufsicht auf die Zugangsseite des Kabelkanales mit Steckdosenbox, Montageschiene für dieselbe, elektrischem Verbindungskabel und Abdeckung,
- Fig. 7: einen Querschnitt durch den Kabelkanal und Steckdosenbox mit Steckverbinderaufnahme und mit integrierter Montageschiene für die Steckdosenbox sowie Abdeckung,

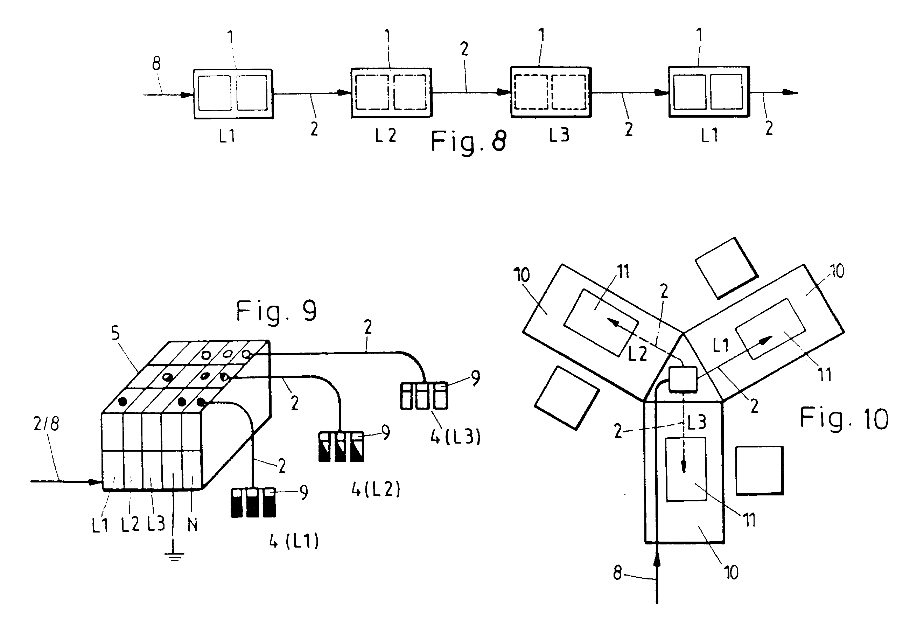

- Fig. 8: eine schematische Darstellung einer elektrischen Verbindung mehrerer Steckdosenboxen mit codierten Verbindungskabeln in fünfpoliger Verbindung L1, L2, L3, L1 ....,
- Fig. 9: eine perspektivische Darstellung eines elektrischen Verteilerblockes mit fünfpoliger Einspeisung und Splittung auf drei dreipolige codierte Verbindungskabel L1, L2 und L3,
- Fig. 10: eine schematische Draufsicht auf eine Arbeitsplatzelektrifizierung mit drei Computergeräten mit fünfpoliger Stromzuführung und Aufsplittung durch den Verteilerblock in drei dreipolige, codierte Verbindungskabel zu den drei Computern.

Das Elektroinstallationssystem für die Haus- und Arbeitsplatzelektrifizierung weist eine Verteilerbox (20) mit einer 380 V-Stromeinspeisung (ES) auf, welche in der Verteilerbox (20) auf drei 220 V-Stromkreise (L1, L2, L3) gesplittet ist, und die Stromabnahme zum Verbraucher von jedem 220 V-Stromkreis (L1, L2, L3) über eine codierte, unverwechselbare Steckverbindung (21a,21b/22a,22b/23a,23b) erfolgt.

Das fünfadrige, 380 V führende Einspeisekabel (ES) wird in der Verteilerbox (20) in seinen drei stromführenden Phasen (L1, L2, L3) mit der Null- und Erdungsphase (N, 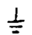 ) auf die drei Stromkreise (L1, L2, L3) mit je 220 V gesplittet und jeder Stromkreis (L1, L2, L3) ist in der Verteilerbox (20) mit einer dreipoligen, codierten Steckbuchse (21a, 22a, 23a) verdrahtet an die zur Stromabnahme zum Verbraucher (V1, V2, V3) ein elektrisches Kabel (24, 25, 26) mit codiertem Stecker (21b, 22b, 23b) unverwechselbar anschließbar ist.

Jeder der drei 220 V-Stromkreise (L1, L2, L3) ist in bevorzugter Weise mit zwei identisch codierten, dreipoligen Steckbuchsen (21a, 22a, 23a) in der Verteilerbox (20) verdrahtet.

Weiterhin ist es bevorzugt, jeden der drei 220 V-Stromkreise (L1, L2, L3) mit einer codierten Steckbuchse (21, 22a, 23a) und wahlweise mit einem elektrischen Schalter (27, 28, 29), wie Ein- und Ausschalter, Endschalter o. dgl. in der Verteilerbox (20) zu verdrahten. Im Schaltbild (Fig. 4) sind die Steckbuchsen (21a, 22a, 23a) und die drei Schalter (27, 28, 29) für jeden Stromkreis (L1, L2, L3) dargestellt.

Die codierten Stecker (21b, 22b, 23b) bilden mit den elektrischen Kabeln (24, 25, 26) vorkonfektionierte Stromabnahmeleitungen.

Die drei Stromkreise (L1, L2, L3) in der Verteilerbox (20) sind mit je einem codierten Ein- und Ausgang in Form einer Steckbuchse verdrahtet, an die wahlweise das 380 V-Einspeisekabel (ES) mit codiertem Stecker (30) und/oder ein Verbindungskabel (2) mit codiertem Stecker (31) an einer nachfolgenden Mehrfach-Steckdosenbox (2) anschließbar sind.

Bei der Verteilerbox (20) nach der Ausführungsvariante gemäß Fig. 2 a erfolgt über das 380 V-Einspeisekabel (ES) die Stromeingabe und in der Verteilerbox (20) ebenfalls die Aufsplittung in drei 220 V-Stromkreise (L1, L2, L3). Hierbei werden von der Verteilerbox (20) aber nur die beiden Stromkreise (L1 und L2) direkt abgenommen und der dritte Stromkreis (L3) wird zu einem nachgeschalteten Verbraucher-, vorzugsweise einer Mehrfachsteckdosenbox (1) weitergeführt.

Die Verteilerbox (20) hat dabei drei codierte Steckbuchsen (21a) für den Stromkreis (L1) und drei codierte Steckbuchsen (22a) für den Stromkreis (L2), an die die entsprechenden Stecker (21b, 22b) unverwechselbar angesteckt werden.

In der Box (20) ist weiterhin die dritte codierte Steckbuchse (23a) vorgesehen, an die ein entsprechend codierter Stecker (31) mit Verbindungsleitung (2) angesteckt wird, über die der dritte Stromkreis (L3) zum anderen Verbraucher V3/1) abgegeben wird.

Jeweils drei Steckbuchsen sind auf einen gemeinsamen Stromkreis (L1 und L2) in der Box (20) verdrahtet.

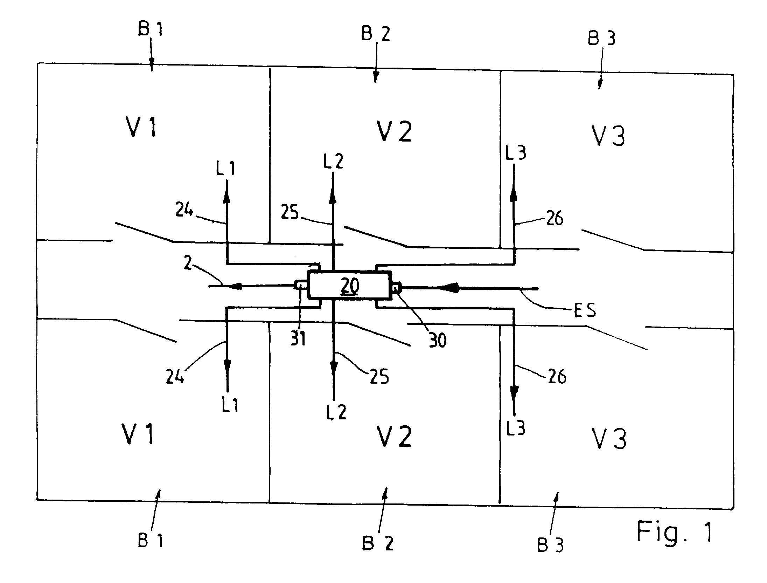

In Fig. 1 ist schematisch eine Arbeitsabteilung mit z.B. sechs Büroräumen B1, B2 und B3) dargestellt, und in jedem Büroraum (B1, B2, B3) sind mehrere elektrische Verbraucher (V1, V2, V3) in Form von Computern, Schreibmaschinen, Rechenmaschinen, Tischleuchten usw. vorhanden, die dann an jeweils eine oder mehrere miteinander gekoppelte Mehrfach-Steckdosenboxen (1) anschließbar sind.

Von der mit 380 V-Einspeisung (ES) versehenen Verteilerbox (20) geht in jedem Büroraum (B1, B2, B3) ein gesplitteter 220 V-Stromkreis (L1, L2, L3) ab; die beiden sich gegenüberliegenden Büroräume (B1) sind an den Stromkreis (L1), die beiden Büroräume (B2) an den Stromkreis (L2) und die beiden Büroräume (B3) an den Stromkreis (L3) angeschlossen.

Für weitere Büroräume kann dann, sofern die Leistung der Stromversorgung in den einzelnen Stromkreisen (L1, L2, L3) ausreicht, über Verbindungsleitungen (2) und Mehrfachsteckdosenboxen (1) eine Stromversorgung erzielt werden, oder aber es wird ein oder werden mehrere Verteilerboxen (20) mit gesplitteten Stromkreisen (L1, L2, L3) eingesetzt.

Ausgehend von der 380 V-Einspeisung auf die Splittung in die drei 220 V-Stromkreise (L1, L2, L3) gemäß Fig. 1 bis 4 zeigen die Fig. 5 bis 10 eine Weiterbildung des Elektroinstallationssystems für die Haus- und Arbeitsplatzelektrifizierung; hierbei sind elektrisch vorverkabelte (vorkonfektionierte) Mehrfach-Steckdosenboxen (1) mit codierten Steckverbinderaufnahmen (3), vorkonfektionierte, elektrische Verbindungskabel (2) mit codierten Steckverbindern (4) und elektrische Verteilerblöcke (5) mit mehreren Verbindungskabeln (2) mit codierten Steckverbindern (4) sowie einer oder mehreren Montageschienen (6) oder einem oder mehreren Kabelkanälen (7) mit darin vorgesehen Montageschienen (6) zu dem System zusammengefaßt.

Bei diesem Installationssystem werden die Mehrfach-Steckdosen (1) durch die Verbindungskabel (2) -entspricht Kabel (24, 25, 26)- mit den codierten Steckverbinderaufnahmen (3) -entspricht Steckbuchsen (21a, 22a, 23a)-, von einem Netzanschlußkabel (8) entspricht Einspeisung (ES)-,welches mit einem codierten Steckverbinder in eine Mehrfachsteckdosenbox (1) oder in den Verteilerbock (5) -entspricht Verteilerbox (20)- eingesteckt ist, welches mit einem codierten Steckverbinder in eine Mehrfach-Steckdosenbox (1) oder in den Verteilerblock (5) eingesteckt ist, zu einem zwei- oder mehrpoligem Netzwerk (Elektrifizierungsnetz) innerhalb einer oder mehrerer (waagerechter, waagerecht und senkrecht, senkrecht und senkrecht, waagerecht, senkrecht und wieder waagerecht oder senkrecht, oder aber auch geneigter) Ebenen schraubenlos verkettet (verknüpft).

Dabei sind die Steckdosenbox (1) und der Verteilerblock (5) an einer oder mehreren Montageschienen (6) oder in einem oder mehreren Kabelkanälen (7) lageveränderbar und/oder austauschbar durch Rasten, Clipsen o. dgl. im Installationssystem schraubenlos festlegbar.

Mindestens zwei, vorzugsweise eine Vielzahl an Mehrfach-Steckdosenboxen (1) lassen sich durch ein- oder mehrphasige, z.B. durch dreipolige oder fünfpolige, vorkonfektionierte Verbindungskabel (2) zu einem von Steckdosenbox (1) zu Steckdosenbox (1) verlaufenden Verkettungssystem verbinden, wobei die einzelnen Steckdosenboxen (1) und Verbindungskabel (2) entsprechend zusammenpassende Codierungen (9) in Form von Farben, Markierungen oder Beschriftungen, zur Vermeidung einer Phasenvertauschung im Netzwerk aufweisen.

Dabei sind diese Codierungen (9) an den Steckdosenboxen (1) im Bereich ihrer Steckverbinderaufnahmen (3) oder direkt an den Steckverbinderaufnahmen (3) und an den Verbindungskabeln (2) oder direkt an deren Steckverbindern (4) vorgesehen, so daß jeder Laie den richtigen Steckverbinder (4) in die passende Steckverbinderaufnahme (3) einstecken muß.

Weiterhin lassen sich die Steckverbinder (4) und Steckverbinderaufnahmen (3) mit codierten, zusammenpassenden Gegenstücken ausstatten, die auch nur ein passendes Zusammenstecken zulassen.

Fig. 8 zeigt eine fünfpolige elektrische Verbindung mehrerer Steckdosenboxen (1) in einem Installationssystem. Hierbei wird die erste Steckdosenbox (1) von einem codierten (vorkonfektionierten Netzanschlußkabel (8) fünfpolig eingespeist und die von Steckdosenbox (1) zu Steckdosenbox (1) geführten, jeweils dazwischen eingesteckten Verbindungskabel (2) mit ihren codierten Steckverbindern (4) stellen zu den Steckdosenboxen (1) je eine fünfpolige elektrische Verbindung L1, L2, L3, L1 usw. her.

In das Installationssystem wird an Knotenpunkten der elektrische Verteilerblock (5) ebenfalls schraubenlos eingesetzt, welcher von einem vorkonfektionierten fünfpoligen, 3 x 220 V zuführenden Verbindungskabel (2) oder Neztanschlußkabel (8) gespeist wird und von dem vorkonfektionierte Verbindungskabel (2) abgehen und zu Steckdosenboxen (1) geführt und mit denen durch die codierten Steckverbindungen (3,4) verbunden sind; hierbei erfolgt die Stromverbindung weiter fünfpolig oder auf dreipolig aufgesplittet.

In Fig. 9 ist der Verteilerblock (5) mit den codierten Verbindungskabeln und der Splittung L1, L2, L3, 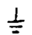 , N, dargestellt. Dieses Verteilersystem kann ebenfalls innerhalb einer oder mehrerer Ebenen verlegt werden.

In Fig. 10 ist z.B. eine Arbeitsplatzelektrifizierung von drei Arbeitsplätzen (10) mit je einem Computergerät (11) mittels eines Verteilerblockes (5) dargestellt und zwar bei fünfpoliger Stromzuführung und Aufsplittung auf 3 mal dreipolig. Vom fünfpoligen Verbindungs- oder Anschlußkabel (2,8) erhält der Verteilerblock (5) seine Stromzufuhr und von diesem Verteilerblock (5) gehen entsprechend Fig. 8 das dreipolige Verbindungskabel (2) als L1, L2 und L3 zu den einzelnen Computergeräten (11) ab.

Die Steckdosenboxen (1) sind durch die codierten Steckverbindungen im Installationssystem nachrüstbar und/oder gegen andere Steckdosenboxen, wie Steckdosenboxen mit Überspannungsschutz, Störschutz oder Sicherungselementen, austauschbar und kombinierbar festlegbar.

Jede Steckdosenbox (1) enthält in sich einen oder mehrere, vorkonfektionierten Stromkreise mit entsprechender Codierung (9).

Zur Festlegung der Steckdosenboxen (1) und Verteilerblöcke (5) im Installationssystem werden entweder nur Montageschienen (6) eingesetzt, die auf oder in einer Gebäudewandung befestigt und an denen die Steckdosenboxen (1) und Verteilerblöcke (5) an den gewünschten Stellen durch Rasten lösbar und lageveränderbar (verschiebbar) angebracht werden. Die Montageschienen (6) werden mit den Steckdosenboxen (1) bis auf die Zugänge zu den Steckdosenboxen (1) von einer profilierten Abdeckung verkleidet, durch ebenfalls durch Rasten oder Clipsen an den Montageschienen (6) und/oder Steckdosenboxen (1) abnehmbar gehalten wird.

Es ist jedoch bevorzugt, die Steckdosenboxen (1) und Verteilerblöcke (5) in Kabelkanälen (7) unterzubringen, wobei diese Kabelkanäle (7) auf oder in einer Gebäudewand, Trennwand, Möbelwand o. dgl. befestigt werden. In den Kabelkanälen (7) sind Montageschienen (6) vorgesehen (darin befestigt oder einstückig angeformt) und auf/in diesen Montageschienen (6) werden die Steckdosenboxen (1) bzw.. Verteilerblöcke (5) durch angeformte Rastteile (13) durch Rasten oder Clipsen befestigt.

Die den Zugang zu den Steckdosenboxen (1) bildende offene Kanalseite wird durch eine Abdeckung (12) verschlossen, welche im Bereich jeder Steckdosenbox (1) mit einem die Steckdosenbox (1) umfassenden Ausschnitt (12a) ausgestaltet und von einer plattenförmigen, mit Rastteilen (12b) zur Rastverbindung mit dem Kabelkanal (7) versehenen Profilschiene gebildet ist (vgl. Fig. 1 bis 3).

Es besteht auch die Möglichkeit, die Steckdosenboxen (1) und Verteilerblöcke (5) auf/an den Montageschienen (6) durch Schrauben lösbar zu befestigen.

Das Installationssystem ist erfindungsgemäß so ausgelegt, daß es mit einer normalen Hauselektrik verglichen werden kann.

In diesem System ist auch die Anordnung von Steuerleitungen für Schaltkreise möglich und das System kann auch in den sogenannten BUS-System angeordnet werden.

## Patentansprüche

1. Elektroinstallationssystem für die Haus- und Arbeitsplatzelektrifizierung mit einer Verteilerbox (20) mit einer 380 V-Stromeinspeisung (ES), welche in der Verteilerbox (20) auf drei 220 V-Stromkreise (L1, L2, L3) gesplittet ist, dadurch gekennzeichnet, daß die Stromabnahme zum Verbraucher (V1, V2, V3) von jedem 220 V-Stromkreis (L1, L2, L3) über eine eigene codierte, unverwechselbare Steckverbindung (21a,21b/22a,22b/23a,23b) erfolgt.

2. Elektroinstallationssystem nach Anspruch 1, dadurch gekennzeichnet, daß das fünfadrige, 380 V führende Einspeisekabel (ES) in der Verteilerbox (20) in seinen drei stromführenden Phasen (L1, L2, L3) mit der Null- und Erdungsphase (N, 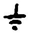 ) auf die drei Stromkreise (L1, L2, L3) mit je 220 V gesplittet und jeder Stromkreis (L1, L2, L3) in der Verteilerbox (20) mit einer dreipoligen, codierten Steckbuchse (21a, 22a, 23a) verdrahtet ist, an die zur Stromabnahme zum Verbraucher (V1, V2, V3) ein elektrisches Kabel (24, 25, 26) mit codiertem Stecker (21b,22b,23b) unverwechselbar anschließbar ist.

3. Elektroinstallationssystem nach Anspruch 1 oder 2, dadurch gekennzeichnet, daß jeder der drei 220 V-Stromkreise (L1, L2, L3) mit zwei identisch codierten, dreipoligen Steckbuchsen (21a, 22a, 23a) in der Verteilerbox (20) verdrahtet sind.

4. Elektroinstallationssystem nach einem der Ansprüche 1 bis 3, dadurch gekennzeichnet, daß jeder der drei 220 V-Stromkreise (L1, L2, L3) mit einer codierten Steckbuchse (21a, 22a, 23a) und wahlweise mit einem elektrischen Schalter (27, 28, 29), wie Ein- und Ausschalter, Endschalter, Zeitschalter o. dgl. in der Verteilerbox (20) verdrahtet ist.

5. Elektroinstallationssystem nach einem der Ansprüche 1 bis 4, dadurch gekennzeichnet, daß die codierten Stecker (21b, 22b, 23b) mit den elektrischen Kabeln (24, 25, 26) vorkonfektionierte Stromabnahmeleitungen bilden.

6. Elektroinstallationssystem nach einem der Ansprüche 1 bis 5, dadurch gekennzeichnet, daß die drei Stromkreise (L1, L2, L3) in der Verteilerbox (20) mit je einem codierten Ein- und Ausgang in Form einer Steckbuchse verdrahtet sind, an die wahlweise das 380 V-Einspeisekabel (ES) mit codiertem Stecker (30) und/oder ein Verbindungskabel (2) mit codiertem Stecker (4) an einer nachfolgenden Mehrfach-Steckdosenbox (1) anschließbar sind.

7. Elektroinstallationssystem nach einem der Ansprüche 1 bis 6, dadurch gekennzeichnet, daß von den drei in der Verteilerbox (20) aufgesplitteten 220 V-Stromkreise (L1, L2, L3) zwei Stromkreise (L1, L2) direkt über je eine oder mehrere codierte Steckverbindungen (21a,21b/22a,22b) abgenommen und der dritte Stromkreis (L3) über eine codierte Steckverbindung (23a, 31) und ein Verbindungskabel (2) zu einem weiteren - beabstandeten Verbraucher (V)-, vorzugsweise einer Mehrfachsteckdose (1) geführt ist (Fig. 2a).

8. Elektroinstallationssystem nach einem oder mehreren der Ansprüche 1 bis 7, dadurch gekennzeichnet, daß elektrisch vorverkabelte (vorkonfektionierte) Mehrfach-Steckdosenboxen (1) mit ein- oder mehrpoliger Verkabelung und codierten Steckverbinderaufnahmen (3)
und vorkonfektionierte, elektrische Verbindungskabel (2) mit codierten Steckverbindern (4) von einem Netzanschlußkabel (8) aus zu einem zwei- oder mehrpoligem Netzwerk (Elektrifizierungsnetz) innerhalb einer oder mehrerer Ebenen schraubenlos verkettbar sind
und dabei die Steckdosenboxen (1) an einer oder mehreren Montageschienen (6) lageveränderbar und austauschbar, vorzugsweise schraubenlos, im Installationssystem festlegbar sind.

9. Elektroinstallationssystem nach Anspruch 8, dadurch gekennzeichnet, daß mindestens zwei, vorzugsweise eine Vielzahl an Mehrfach-Steckdosenboxen (1) durch ein- oder mehrpolige, vorkonfektionierte Verbindungskabel (2) zu einem von Steckdosenbox (1) zu Steckdosenbox (1) verlaufendem Verkettungssystem verbindbar sind, wobei die einzelnen Steckdosenboxen (1) und Verbindungskabel (2) entsprechend zusammenpassende Codierungen (9) in Form von Farben, Markierungen oder Beschriftungen aufweisen, und/oder deren Steckverbindungen (3,4) unmittelbar codiert ausgebildet sind, wodurch eine Phasenvertauschung im Netzwerk ausgeschlossen wird.

10. Elektroinstallationssystem nach Anspruch 8 oder 9, dadurch gekennzeichnet, daß in das Netzwerk an Knotenpunkten elektrische Verteilerblöcke (5) schraubenlos einsetzbar sind, welche von einem vorkonfektionierten fünfpoligen Anschluß- oder Verbindungskabel (8,2) gespeist und von dem vorkonfektionierte Verbindungskabel (2) zu den Steckdosenboxen (1) fünfpolig oder auf dreipolig gesplittet abgehen und mit den vorkonfektionierten Steckverbindungen (3,4) innerhalb einer Ebene oder in mehreren Ebenen mit den Steckdosenboxen (1) verbindbar sind.

11. Elektroinstallationssystem nach einem der Ansprüche 8 bis 10, dadurch gekennzeichnet, daß die Steckdosenboxen (1) durch die codierten Steckverbindungen nachrüstbar und/oder gegen andere Steckdosenboxen, wie Steckdosenboxen mit Überspannungsschutz, Störschutz oder Sicherungselementen austauschbar sowie kombinierbar im Installationssystem festlegbar sind.

12. Elektroinstallationssystem nach einem der Ansprüche 8 bis 11, dadurch gekennzeichnet, daß jede Steckdosenbox (1) in sich einen oder mehrere, vorkonfektionierte Stromkreise mit entsprechender Codierung enthält.

13. Elektroinstallationssystem nach einem der Ansprüche 8 bis 12, dadurch gekennzeichnet, daß die Montageschienen (6) in oder auf einer Gebäudewandung, Trennwand, Möbelwand o. dgl. festlegbar und die daran angebrachten Steckdosenboxen (1) mit Verbindungskabeln (2) von einer im Bereich der Steckdosenboxen (1) einen Ausschnitt zeigenden Abdeckung in Form einer aufrastbaren Profilschiene abgedeckt sind.

14. Elektroinstallationssystem nach einem der Ansprüche 8 bis 13, dadurch gekennzeichnet, daß die Steckdosenbox (1) in einem Kabelkanal (7) lagefixierbar, lageveränderbar und lösbar eingesetzt sind, welcher in einer oder auf eine Gebäudewandung, Trennwand, Möbelwand o. dgl. festlegbar ist und an seiner offenen, den Zugang zu den Steckdosenboxen (1) freigebenden Kanalseite durch eine im Bereich der Steckdosenboxen (1) jeweils einen Ausschnitt (12a) aufweisenden Abdeckung in Form einer am Kabelkanal (7) verrastbaren Profilschiene geschlossen ist.

15. Elektroinstallationssystem nach einem der Ansprüche 8 bis 14, dadurch gekennzeichnet, daß die Steckdosenboxen (1) und Verteilerblöcke (5) mit angeformten Rastteilen (13) auf der Montageschiene (6) oder einer im Kabelkanal (7) vorgesehenen, vorzugsweise darin integrierten Montageschiene (6) durch Rasten, Clipsen o.dgl. schraubenlos festlegbar sind.

## Claims

1. Electrical installation system for domestic and industrial electrification, comprising a distributor box (20) with a 380-volt current supply (ES), which is split in the distributor box (20) between three 220-volt circuits (L1, L2, L3), characterised in that the current take-off to the consumer (V1, V2, V3) is effected by each 220-volt circuit (L1, L2, L3) via an individual coded, non-interchangeable plug connection (21a, 21b/22a, 22b/ 23a, 23b).

2. Electrical installation system according to claim 1, characterised in that the five-core supply cable (ES) carrying 380 v in the distributor box (20) is split in its three current-carrying phases (L1, L2, L3) with the zero and earthing phase (N, 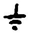 ) between the three circuits (L1, L2, L3) of 220 v each, and each circuit (L1, L2, L3) is wired in the distributor box (20) with a three-pole, coded plug-in bush (21a, 22a, 23a), to which for current take-off by the consumer (V1, V2, V3) an electrical cable (24, 25, 26) is non-interchangeably connectable with coded plugs (21b, 22b, 23b).

3. Electrical instailation system according to claim 1 or 2, characterised in that each of the three 220-volt circuits (L1, L2, L3) is wired to two identically coded three-pole plug-in bushes (21a, 22a, 23a) in the distributor box (20).

4. Electrical installation system according to one of claims 1 to 3, characterised in that each of the three 220-volt circuits (L1, L2, L3) is wired in the distributor box (20) to a coded plug-in bush (21a, 22a, 23a) and optionally to an electric switch (27, 28, 29), such as an on-off switch, limit switch, time switch or the like.

5. Electrical installation system according to one of claims 1 to 4 characterised in that the coded plugs (21b, 22b, 23b) with the electric cables (24, 25, 26) form prefabricated current take-off leads

6. Electrical installation system according to one of claims 1 to 5, characterised in that the three circuits (L1, L2, L3) are wired in the distributor box (20) to a respective coded input and output in the form of a plug-in bush, to which optionally the 380-volt supply cable (ES) is connectable with a coded plug (30) and/or a connecting cable (2) is connectable with a coded plug (4) to a downstream multiple socket box (1).

7. Electrical installation system according to one of claims 1 to 6, characterised in that of the three 220-volt circuits split in the distributor box (20), two circuits (L1, L2) are picked off direct via one or more coded plug connections (21a, 21b/ 22a, 22b) and the third circuit (L3) passes via a coded plug connection (23a, 31) and a connecting cable (2) to a further, remote consumer (V), preferably to a multiple socket box (1)(Fig. 2a).

8. Electrical installation system according to one or more of claims 1 to 7, characterised in that electrically ready-cabled (prefabricated) multiple socket boxes (1) having single- or multi-pole cabling and coded plug connector seats (3) and prefabricated electrical connecting cable (2) are linkable, preferably without screws and with coded plug-in connectors (4), within one or more planes, from a mains connecting cable (8) to a two- or multi-pole mains (electrification mains), and the socket boxes (1) are fixable in the installations system to one or more mounting rails (6) so as to be variable in position and exchangeable.

9. Electrical installation system according to claim 8, characterised in that at least two, preferably a large number of multiple socket boxes (1) are connectable by single- or multi-pole prefabricated connecting cable (2) to a linkage system extending from socket box (1) to socket box (1), the individual socket boxes (1) and connecting cable (2) having appropriately matching coding (9) in the form of colour, markings or inscriptions and/or their plug connections (3, 4) being formed directly coded, so that there is no risk of phase reversal in the mains.

10. Electrical installation system according to claim 8 or 9, characterised in that electrical distributor blocks (5) are screwlessly insertable at node points in the mains and are supplied by a preferably five-pole connecting cable (8, 2) and pass split into five or three poles from the prefabricated connecting cable (2) to the socket boxes (1) and are connectable by the prefabricated plug connections (3, 4) to the socket boxes (1) within one or more planes.

11. Electrical installation system according to one of claims 8 to 10, characterised in that the socket boxes (1) can be retrospectively equipped with the coded plug connections and/or are exchangeable for other socket boxes, such as those with over-voltage protection, fault protection, or fuse elements, and can be fixed in the installation system in a combinable manner.

12. Electrical installation system according to one of claims 8 to 11, characterised in that each socket box (1) comprises per se one or more prefabricated circuits with corresponding coding.

13. Electrical installation system according to one of claims 8 to 12, characterised in that the mounting rails (6) are fixable in or on a wall of a building, a partition wall, furniture wall or the like and the socket boxes (1) mounted thereon and having connecting cables (2) are covered by a covering having a cut-out in the region of the socket boxes (1) in the form of a profile rail capable of latching on.

14. Electrical installation system according to one of claims 8 to 13, characterised in that the socket boxes (1) is insertable in a cable conduit (7) so as to be fixable in position, variable in position and detachable, the conduit being fixable in or on a wall of a building, a partition wall, furniture wall or the like and is closed at its open conduit side permitting access to the socket boxes (1) by a cover having a respective cut-out (12a) in the region of the socket boxes (1) in the form of a profile rail latchable to the cable conduit (7).

15. Electrical installation system according to one of claims 8 to 14, characterised in that the socket boxes (1) and distributor blocks (5) are fixable without screws by integral locating parts (13) on the mounting rail (6) or a mounting rail (6) provided in the cable conduit (7) and preferably incorporated therein by way of catches, clips or the like.

## Revendications

1. Système d'installation électrique pour l'électrification de maisons d'habitation et de lieux de travail avec une boîte de distribution (20) pour une alimentation en courant de 380 V (ES), laquelle est divisée en trois circuits électriques de 220 V (L1, L2, L3),
caractérisé en ce que
la prise de courant à destination du consommateur (V1, V2, V3) s'effectue de chaque circuit électrique 220 V (L1, L2, L3) par l'intermédiaire d'un propre connecteur mâle femelle codé, irréversible (21a, 21b / 22a, 22b / 23a, 23b).

2. Système d'installation électrique selon la revendication 1,
caractérisé en ce que
le câble d'alimentation 380 V (ES) à cinq brins est divisé, dans la boîte de distribution (20) dans ses trois phases conductrices (L1, L2, L3) avec phase neutre et mise à la terre (N, 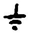 ) sur les trois circuits électriques (L1, L2, L3) de 220 V chacun et que chaque circuit électrique (L1, L2; L3) est câblé dans la boîte de distribution (20) avec une fiche femelle tripolaire, codée (21a, 22a, 23a), à laquelle un câble électrique (24, 25, 26) avec fiche mâble codée (21b, 22b, 23b) peut être raccordé irréversiblement pour prise de courant à destination du consommateur (V1, V2, V3).

3. Système d'installation électrique selon la revendication 1 ou 2,
caractérisé en ce que
chacun des trois circuits électriques 220 V (L1, L2, L3) est câblé, dans la boîte de distribution (20), avec deux fiches femelles tripolaires, codées (21,a, 22a, 23a) identiques.

4. Système d'installation électrique selon l'une des revendications 1 à 3,
caractérisé en ce que
chacun des trois circuits électriques 220 V (L1, L2, L3) est câblé, dans la boîte de distribution (20), avec une fiche femelle codée (21,a, 22a, 23a) et, au choix, avec un commutateur électrique (27, 28, 29), tel qu'un disjoncteur à deux positions, un commutateur de fin de course, un relais temporisé ou autre dispositif analogue.

5. Système d'installation électrique selon l'une des revendications 1 à 4,
caractérisé en ce que
la fiche mâle codée (21b, 22b, 23b) forme avec les câbles électriques (24, 25, 26) des conducteurs de prise de courant préconfectionnés.

6. Système d'installation électrique selon l'une des revendications 1 à 5,
caractérisé en ce que
les trois circuits de courant (L1, L2, L3) sont câblés chacun, dans la boîte de distribution (20), avec une entrée et une sortie codées sous forme de fiche femelle à laquelle le câble d'alimentation 380 V (ES) avec fiche codée (30) et/ou un câble de connexion (2) avec fiche codée (4) peuvent être raccordés à un connecteur multiple (1) placé en aval.

7. Système d'installation électrique selon l'une des revendications 1 à 6,
caractérisé en ce que
deux (L1, L2) des trois circuits électriques 220V (L1, L2, L3), divisés dans la boîte de distribution (20) sont raccordés directement, chacun, à un ou plusieurs connecteurs mâles-femelles codés (21a,21b/22a,22b) et que le troisième circuit électrique (L3) est conduit, par l'intermédiaire d'un connecteur à fiches codé (23a, 31) et d'un câble de connexion (2), à un autre consommateur (V) - à distance -, de préférence à une prise de courant multiple (1) (cf. Fig. 2a).

8. Système d'installation électrique selon une ou plusieurs revendications 1 à 7,
caractérisé en ce que
des prises multiples (1) à câblage monopolaire ou multipolaire et logements de connecteurs mâles-femelles codés (3) ) précâblées électriquement (préconfectionnées)
et des câbles électriques de connexion (2) préconfectionnés pourvus de connecteurs mâles femelles
peuvent être enchaînés, sans vis, à un ou plusieurs niveaux, à partir d'un câble de branchement sur secteur (8), pour former un réseau (d'électrification) bipolaire ou multipolaire,
les boîtes de prises de courant à fiche (1) pouvant être fixées, de préférence sans vis, dans le système d'installation, sur une ou plusieurs embases de montage (6), tout en étant orientables et interchangeables.

9. Système d'installation électrique selon la revendication 8,
caractérisé en ce que deux boîtes de prise de courant multiple (1) au moins, préférentiellement: plusieurs, peuvent être reliées, à l'aide de câbles de connexion (2) monopolaires ou multipolaires, pour former un système de chaînage s'étendant de boîte de prise de courant femelle en boîte de prise de courant femelle, les différentes boîtes de prise de courant femelle (1) et les câbles de connexion (2) présentant adéquatement des codages (9) en forme de couleurs, marques ou inscriptions assorties et/ou leurs connecteurs à fiches (3, 4) étant directement codés, ce qui exclue toute substitution de phases dans le réseau.

10. Système d'installation électrique selon la revendication 8 ou 9,
caractérisé en ce que
des blocs de distribution électriques (5), alimentés par un câble de branchement ou de connexion pentapolaire préconfectionné (8, 2) et conduits, divisés pentapolarisés ou tripolarisés, à partir du câble de branchement préconfectionné, (2) aux boîtes de prise de courant femelle (1) peuvent être installés sans vis dans le réseau, à des points nodaux, et reliés, sur un ou plusieurs niveaux, aux boîtes de prise de courant femelle (1) à l'aide des connecteurs à fiches mâles préconfectionnés (3, 4).

11. Système d'installation électrique selon l'une des revendications 8 à 10,
caractérisé en ce que
les boîtes de prise de courant femelle (1) fixées dans le système d'installation peuvent être postéquipées par les connecteurs à fiches codés et/ou remplacées par d'autres boîtes de prise de courant, telles que prises de courant avec coupe-circuit de surtension, dispositif antiparasite ou élément de sécurité, ainsi que combinées.

12. Système d'installation électrique selon l'une des revendications 8 à 11,
caractérisé en ce que
chaque boîte de pris de courant femelle (1) comprend un ou plusieurs circuits électriques préconfectionné/s avec codage correspondant.

13. Système d'installation électrique selon l'une des revendications 8 à 12,
caractérisé en ce que
l'embase de montage (6) peut être fixée dans ou sur un mur de bâtiment, une cloison de séparation, une paroi de meuble ou autre surface analogue et que les boîtes de prise de courant femelle (1), y fixées, et les câbles de raccordement (2) sont couverts par un profilé de recouvrement à encliquetage, présentant une découpe dans la zone des prises de courant.

14. Système d'installation électrique selon l'une des revendications 8 à 13,
caractérisé en ce que
la boîte de prise de courant femelle (1) peut être positionnée fixement, orientable et amovible dans un caniveau de câble qui peut être fixé dans ou sur un mur de bâtiment, une cloison de séparation, une paroi de meuble ou autre surface analogue et dont le côté ouvert, permettant l'accès aux boîtes de prise de courant (1), est fermé par un profilé de recouvrement, encliquetable sur le caniveau de câble (7) et présentant une découpe (12a) dans la zone de chaque prise de courant (1).

15. Système d'installation électrique selon l'une des revendications 8 à 14,
caractérisé en ce que
les boîtes de prises de courant () et les blocs de distribution (5) peuvent être fixés, sans vis, par des éléments d'encliquetage (13), moulés d'une pièce, sur l'embase de montage (6) ou sur une embase de montage (6) prévue dans le caniveau de câble (7), à l'aide de crans d'arrêts, de clips ou d'autres pièces analogues.
